# EUROPEAN PATENT SPECIFICATION

(11) **EP 3 711 128 B1**
(45) Date of publication and mention of the grant of the patent: **05.01.2022**
(21) Application number: 17809214.4
(22) Date of filing: 17.11.2017
(51) Int. Cl.: H02H 3/06, H02H 7/26, H02J 3/36

(54) **FAULT HANDLING IN A DC POWER SYSTEM**
FEHLERBEHANDLUNG IN EINEM GLEICHSPANNUNGSSTROMSYSTEM
GESTION DE DÉFAUT DANS UN SYSTÈME D'ALIMENTATION EN COURANT CONTINU

(43) Date of publication of application: 23.09.2020
(73) Proprietor: Hitachi Energy Switzerland AG, 5400 Baden (CH)
(72) Inventor: KANNAN, Vinothkumar, Chennai Tamilnadu 600122 (IN); BARUPATI, Praveen Kumar, 771 34 Ludvika (SE)
(74) Representative: AWA Sweden AB
(86) International application number: PCT/EP2017/079580
(87) International publication number: WO 2019/096402

(56) References cited:
- EP-A1- 2 823 544
- GB-A- 2 523 535
- US-A- 3 543 045
- US-A1- 2012 201 059

## Description

### FIELD OF INVENTION

The present invention generally relates to power systems. More particularly the present invention relates to a method, fault handling arrangement and computer program product for handling faults on power lines in a DC, direct current, power system as well as to such a Dc power system.

### BACKGROUND

Fault handling is an important aspect in power systems such as power transmission systems.

In such systems a fault may occur and then be cleared without any activities being performed by a system operator. This may for instance be the case if the system comprises overhead lines.

For this reason it is known to use circuit breakers with automatic reclosing functionality. These are typically used in Alternating Current (AC) systems. The circuit breakers are in this case used to break the connection with an AC power line after the occurrence of a fault and then after certain predetermined duration, the circuit breaker is automatically reclosed. In case the fault persists, the circuit breaker is kept permanently open. The opening and closing of such circuit breakers is in AC systems performed as the AC current has a zero crossing.

However, this type of operation is not possible in a direct current (DC) power system where there is no current zero crossing.

One study that has been made into restart procedure for hybrid HVDC circuit breakers used in DC power systems is the study of R. Derakhshanfar, T. U. Jonsson, Ueli Steiger, M. Habert, "Hybrid HVDC breaker - A solution for future HVDC system", CIGRE 2014, Paris. Another study is the study of Vinothkumar K, Inger Segerqvist, Niclas Johannesson and Arman Hassanpoor, "Sequential Auto-Reclosing Method for Hybrid HVDC Breaker in VSC HVDC Links", SPEC 20 16, New Zealand.

Arrangements for handling faults in HVDC systems are also known from EP 2823544 A1 and US 3543045.

It is at the same time important that such a DC power system can be continued to be operated when it is investigated if the fault has been cleared and that the return to normal operation can be made fast in case it is. It is above all of interest that the stress on current carrying elements of a converter station where the investigation is made is reduced.

There is thus a need for addressing one or more of the above-mentioned issues.

### SUMMARY OF THE INVENTION

The present invention, as defined by the appended claims, addresses the problem of enhancing the availability of a direct current (DC) system during DC faults which are temporary in nature and at the same time reducing the stress on current carrying elements of a converter station when handling faults in a direct current, DC power system.

This object is according to a first aspect of the present invention achieved through a method of handling faults on power lines in a DC, direct current, power system comprising at least two converters in corresponding converter stations connected to different DC power lines, where each converter station is connected to a number of DC power lines at least one of which is a power line in the DC power system and each connection is made via at least one line separating device, the method being performed in a fault handling arrangement and comprising upon the detecting of a fault of a first power line in the DC power system interconnecting a first converter in a first converter station with a second converter in a second converter station, where the first power line is connected to the first converter via a first line separating device and to the second converter via a second line separating device,
operating the first line separating device in cooperation with operation of the second line separating device to disconnect the first power line from the DC power system,
operating at least one further line separating device of the first converter station for isolating the first converter station from the DC power system, investigating if the fault has been cleared, after the second line separating device has been operated for separating the first power line from the second converter station while power lines between the second converter station and any other converter station are operational, and operating the first line separating device in cooperation with operation of the second line separating device to reconnect the first power line and the at least one further line separating device of the first converter station to again connect the first converter station to the DC power system if the fault has been cleared and otherwise permanently disconnecting the first power line and reconnecting the first converter station to the DC power system.

The object is according to a second aspect of the invention achieved through a fault handling arrangement for handling faults on power lines in a direct current, DC, power system comprising at least two converters in corresponding converter stations connected to different power lines, where each converter station is connected to a number of DC power lines at least one of which is a power line in the DC power system and each connection is made via at least one line separating device, the fault handling arrangement comprising a first fault handling unit configured to upon the detecting of a fault on a first power line interconnecting a first converter in a first converter station with a second converter in a second converter stations, where the first power line is connected to the first converter via a first line separating device and to the second converter via a second line separating device,
operate the first line separating device in cooperation with operation of the second line separating device to disconnect the first power line from the DC power system,
operate at least one further line separating device of the first converter station for isolating the first converter station from the DC power system, investigate if the fault has been cleared, after the second line separating device has been operated for separating the first power line from second converter station while power lines between the second converter station and any other converter station are operational, and operate the first line separating device in cooperation with operation of the second line separating device to reconnect the first power line and the at least one further line separating device of the first converter station to again connect the first converter station to the DC power system if the fault has been cleared and otherwise permanently disconnect the first power line and reconnect the first converter station to the DC power system.

The object is according to a third aspect of the invention achieved through a direct current, DC, power system comprising a number of power lines, a number of line separating devices and at least two converters in corresponding converter stations connected to different power lines, and a fault handling arrangement according to the second aspect, where each converter station is connected to a number of DC power lines at least one of which is a power line in the DC power system and each connection is made via at least one line separating device.

The object is according to a fourth aspect achieved through a computer program product for handling faults on power lines in a DC, direct current, power system comprising a number of power lines, a number of line separating devices and at least two converters in corresponding converter stations connected to different power lines, where each converter station is connected to a number of DC power lines at least one of which is a power line in the DC power system and each connection is made via at least one line separating device, the computer program product comprising a data carrier having computer program code configured to cause a fault handling arrangement to:
upon the detecting of a fault of a first power line interconnecting a first converter in a first converter station with a second converter in a second converter station, where the first power line is connected to the first converter via a first line separating device and to the second converter via a second line separating device,
operate the first line separating device in cooperation with operation of the second line separating device to disconnect the first power line from the DC power system,
operate at least one further line separating device of the first converter station for isolating the first converter station from the DC power system, investigate if the fault has been cleared, after the second line separating device has been operated for separating the first power line from the second converter station while power lines between the second converter station and any other converter station are operational, and operate the first line separating device in cooperation with operation of the second line separating device to reconnect the first power line and the at least one further line separating device of the first converter station to again connect the first converter station to the DC power system if the fault has been cleared and otherwise permanently disconnect the first power line and reconnect the first converter station to the DC power system.

The present invention has a number of advantages. It provides improved system availability and power system security. It allows support to any connected AC system. It also reduces the spread of a disturbance through the entire power system during restarts in the DC grid. As the spread of the fault disturbance is minimized, the current stress at the converter valves and other equipment is reduced. The valves and other equipment are thus not subject to current stress at every restart attempt.

### BRIEF DESCRIPTION OF THE DRAWINGS

The present invention will in the following be described with reference being made to the accompanying drawings, where
Fig. 1 schematically shows a direct current (DC) power transmission system in the form of a DC grid interconnecting three converter stations,
fig. 2 schematically shows a fault handling arrangement comprising a first, second and third fault handling unit together with a master control unit,
fig. 3 shows a flow chart of a number of method steps being performed in the master control unit,
fig. 4 shows a flow chart of a number of method steps being performed in the first fault handling unit,
fig. 5 shows a flow chart of a number of method steps being performed in the second fault handling unit,
fig. 6 schematically shows a number of current and voltages in the DC power system when a fault occurring in a first power line is being handled and the fault persists,
fig. 7 schematically shows a number of current and voltages in the DC power system when the fault occurring in the first power line is being handled and the fault is cleared,
fig. 8 shows a double bus double breaker configuration that can be used in the DC grid, and
fig. 9 schematically shows a computer program procured comprising computer program code for realizing at least a part of the functionality of the fault handling arrangement.

### DETAILED DESCRIPTION OF THE INVENTION

In the following, a detailed description of preferred embodiments of the invention will be given.

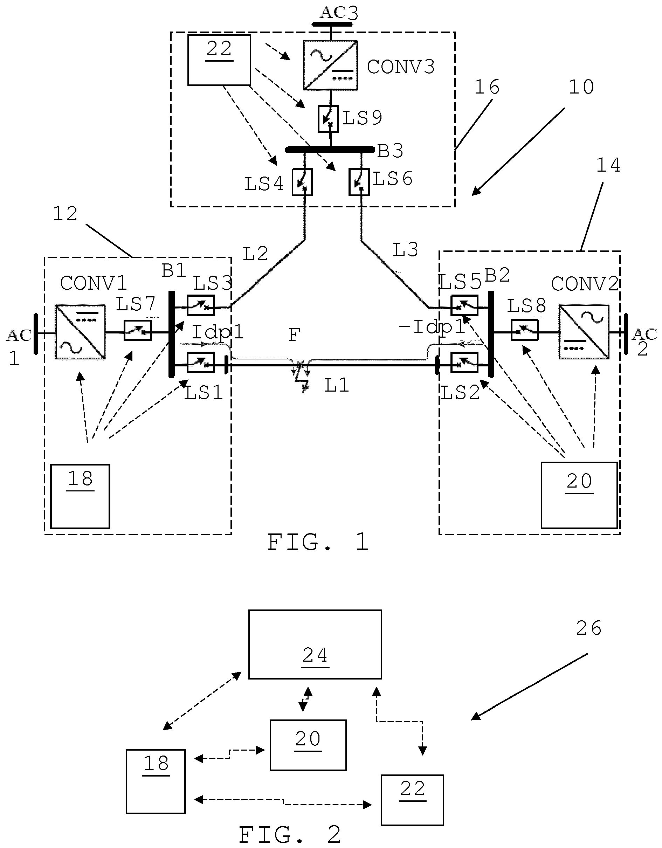

Fig. 1 shows a simplified multi-terminal Direct Current (DC) power system 10, such as a High Voltage Direct Current (HVDC) power system comprising at least two converters in corresponding converter stations connected to different DC power lines, where each converter station is connected to a number of DC power lines, at least one of which is a power line in the DC power system and each connection is made via a line separating device. In the following example all the DC power lines are power lines in the DC power system. However, as will be seen later this is not necessarily always the case.

The exemplifying power system 10 comprises a first converter station 12, a second converter station 14 and a third converter station 16. The first converter station 12 is interconnected with the second converter station 14 via a first power line L1. Here the first converter station 12 comprises a first line separating device LS1 and the second converter station 14 comprises a second line separating device LS2 for the interconnection with the first power line L1. The first converter station 12 is also interconnected with the third converter station 16 via a second power line L2. Here the first converter station 12 comprises a third line separating device LS3 and the third converter station 16 comprises a fourth line separating device LS4 for the interconnection with the second power line L2. The second converter station 14 is in turn interconnected with the third converter station 16 via a third power line L3. In this case the second converter station 14 comprises a fifth line separating device LS5 and the third converter station 16 comprises a sixth line separating device LS6 for the interconnection with the third power line L3.

The first converter station 12 comprises a first converter CONV 1, which may be either a voltage source converter or a current source converter. It may more particularly be a DC fault tolerant converter, i.e. a converter with the capability to limit the fault current. The fault tolerant converter may in the case of a voltage source converter be a full bridge (FB) modular multilevel converter (MMC) or a half bridge (HB) modular multilevel converter (MMC) with one or more DC breakers having current breaking capabilities and in case of a current source converter a line commutated converter (LCC) with DC fault tolerant capability. The converter CONV 1has an alternating current (AC) side connected to a first AC system AC1 and a DC side connected to a first internal DC bus B1 via a seventh line separating device LS7, which internal DC bus B1 is also connected to the first and third line separating devices LS1 and LS3.

In a similar manner the second converter station 14 comprises a second converter CONV 2, which can also be a fault tolerant converter of any of the above described types. having an AC side connected to a second AC system AC2 and a DC side connected to second internal DC bus B2 via an eighth line separating device LS8, which internal DC bus B2 is also connected to the second and fifth line separating devices LS2 and LS5.

In a similar manner the third converter station 16 comprises a third converter CONV 3, which may or may not also be a DC fault tolerant converter of any of the above described types. The converter CONV 3 has an AC side connected to a third AC system AC3 and a DC side connected to third internal DC bus B3 via a ninth line separating device LS9, which internal DC bus B3 is also connected to the fourth and sixth line separating devices LS4 and LS6.

It can thereby be seen that the first power line L1 interconnects the first converter CONV 1 in the first converter station 12 with the second converter CONV 2 in the second converter station 14, where the first power line L1 is connected to the first converter CONV 1 via the first line separating device LS1 and to the second converter CONV 2 via the second line separating device LS2.

In each converter station there is also a fault handling unit used to control the converter and the line separating devices during a fault. This control is indicated with dashed arrows. In the first converter station 12 there is thus a first fault handling unit 18 controlling the first converter CONV 1 and the first, third and seventh line separating devices LS1, LS3 and LS7. In the second converter station 14 there is a second fault handling unit 20 controlling the second converter CONV 2 and the second, fifth and eighth line separating devices LS2, LS5 and LS8. In the third converter station 16 there is a third fault handling unit 22 controlling the third converter CONV 3 and the fourth, sixth and ninth line separating devices LS4, LS6 and LS9.

As is known within the art, a MMC may be made up submodules that may be half-bridge submodules, full bridge submodules or hybrid-submodules like submodules of the clamped double-cell type.

The line disconnecting devices may be hybrid circuit breakers, such as Hybrid HVDC circuit breakers (HHBs). As an alternative they may be disconnectors, such as ultrafast disconnectors or high-speed switches (HSSs). A disconnector and an HSS is a mechanical switch that obtains a mechanical separation in a conduction path in order to obtain separation of a converter from a power line, while a hybrid circuit breaker is a device comprising both mechanical and electronic switches as well as non-linear resistors like surge arresters and load commutation switches in order to interrupt a current running through the circuit breaker. The hybrid circuit breaker may also be divided into sections, where each section comprises three parallel branches, a first branch with a disconnector and a load commutation switch, a second branch with a number of electronic switches and a third surge arrester branch. The operation of both the disconnector and the circuit breaker leads to an end result of obtaining isolation or separation of a converter station from a power line. However, a circuit breaker is able to obtain such a separation at high voltage and current levels while a disconnector typically requires zero or small current levels in order to obtain the separation.

The line separating device is with advantage a disconnector or a high-speed switch when the converter is a DC fault tolerant converter such as a fault tolerant LCC or an MMC based on submodules, while the line separating device is typically a hybrid circuit breaker in case the converter employs half-bridge or other types of submodules that are only able to limit fault currents in one direction, where such fault current limitation is achieved when the submodules are being blocked, i.e. the switches in the submodules are turned off.

Moreover of the power lines, the first power line L1 is typically an overhead line, whereas the second and third power lines L2 and L3 may be either overhead lines or cables.

It should here also be mentioned that it is possible to omit the seventh, eighth and ninth line separating devices LS7, LS8 and LS9 from the power system as well as the local DC buses B1, B2 and B3.

The fault handling units are a part of a fault handling arrangement. One example of such a fault handling arrangement 26 is shown in fig. 2 and comprises the first, second and third fault handling units 18, 20 and 22 as well as a master control unit 24. Here the first, second and third fault handling units 18, 20 and 22 are shown as communicating with each other as well as with the master control unit 24. The communication is here shown using bidirectional dashed arrows.

The concept of HVDC grids has evolved and is largely driven by the development of VSC based HVDC transmission system, among other reasons.

AC grids can withstand the fault durations to the extent of few hundred milliseconds before losing their stability owing to large kinetic energy stored in the generator units with high inertia. In a DC grid, the inertia of the system is very low and depends on the system capacitance and inductance. To avoid DC system outage, the fault must be cleared as fast as possible especially with Overhead Lines (OHL) where transient disturbances are very frequent to occur. Therefore the realization of HVDC grids depends on the development of either of the technologies relating to DC breaker, or DC fault current limiting or DC fault tolerant converter topology in limiting the DC fault current, in isolating the faulted portion and enable restart of the healthy parts of the system 10.

In transmission systems with overhead lines, line faults are much more frequent than in cable transmissions. Furthermore, overhead lines are also subjected to temporary fault, i.e. faults which disappear after the arc has been extinguished, thus allowing for the line to be restarted. During such faults, it is desirable to re-energize the disconnected line and restore the power transmission as soon as the fault has been cleared. This practice is available as a restart procedure in a point to point HVDC system with LCC converters.

Such restart procedure for half bridge MMC + HHB based HVDC grid have been investigated by for instance R. Derakhshanfar, T. U. Jonsson, Ueli Steiger, M. Habert, "Hybrid HVDC breaker - A solution for future HVDC system", CIGRE 20 14, Paris.

It has also been studied by Vinothkumar K, Inger Segerqvist, Niclas Johannesson and in Arman Hassanpoor, "Sequential Auto-Reclosing Method for Hybrid HVDC Breaker in VSC HVDC Links", SPEC 20 16, New Zealand.

Though the restart procedure of HVDC Grid which has one or more DC fault tolerant converters such as FB MMC and LCC is not found in the literature, one possible procedure may be the following.

For ease of understanding we consider the HVDC Grid with FB MMC here for the discussion.

Consider the three terminal system shown in Figure 1, where the converters are full bridge (FB) MMC converters and the line separating devices are high speed switches (HSSs) which can open up only at current zero or small current levels. A restart operation corresponding to the traditional approach might for this system configuration involve the following procedure, at a DC fault in the first power line L1:
a) The line protection algorithm at the first and second converter stations 12 and 14 detects the fault and blocks or partially blocks the converters CONV 1 and CONV 2. The converter CONV 3 is also blocked or partially blocked with the help of either communication or any protection mechanism.
b) This results in voltage zero in the HVDC grid 10 and the fault current is reduced to zero so that the HSSs LS1 and LS2 are opened to isolate the faulted line.
c) Now the rest of the HVDC grid can ramp up the DC voltage to the pre-fault values and wait for the deionization to complete. To ramp the DC grid system voltage back to pre-fault voltage, the time required will be close to the de-ionization time. Therefore the entire real power transfer in the HVDC grid remains at zero during this restart attempt.
d) At the end of first deionization time, the line HSSs of converters CONV 1 and CONV 2 on the faulted line namely, LS1 and LS2 are closed (along with DC Pre-insertion Resistor (PIR) to limit the disturbance in the respective AC sides).
e) If the fault still persists then all the converters in the HVDC grid feed to the fault. So all the converters in the HVDC grid are again blocked to reduce the fault current to zero and the HSSs LS1 and LS2 are opened to isolate the faulty first power line L1.
f) The above steps from a) are repeated until a set number of restart attempts has been reached. This is observed with permanent DC fault scenarios which refer to unsuccessful restart attempts. In this case, the faulted line is permanently isolated by opening the HSSs LS1 and LS2, whereas the rest of the system resumes normal operation.
g) If the fault has disappeared or is temporary, then the converters shall change their operating mode to pre-fault operating mode and start power transfer. This is observed with temporary DC fault scenarios which refer to successful restart attempts.

It is observed that the entire power in the DC grid goes to zero and there is no power exchange or very little power exchange with the AC system for the entire duration of restarts. This would result in adverse effects on the transient stability of the power system when there is no availability of power for a duration of approximately one second (for 3 restart attempts). To overcome this disadvantage, an intelligent way of handling the restart operations of HVDC grid with one or more number of converters, with advantage DC fault-tolerant converters, is needed.

There is thus a need for an intelligent procedure for restart operation of HVDC grid especially with DC fault tolerant converters, at temporary and permanent faults. Embodiments of the invention effectively enhance the availability and security of the power system with HVDC grid employing one or more DC fault tolerant converters. Embodiments of the invention can be employed at all scenarios requiring restarts at temporary/permanent faults, for multi-terminal HVDC grids with FB MMC, LCC and as well as HB MMCs.

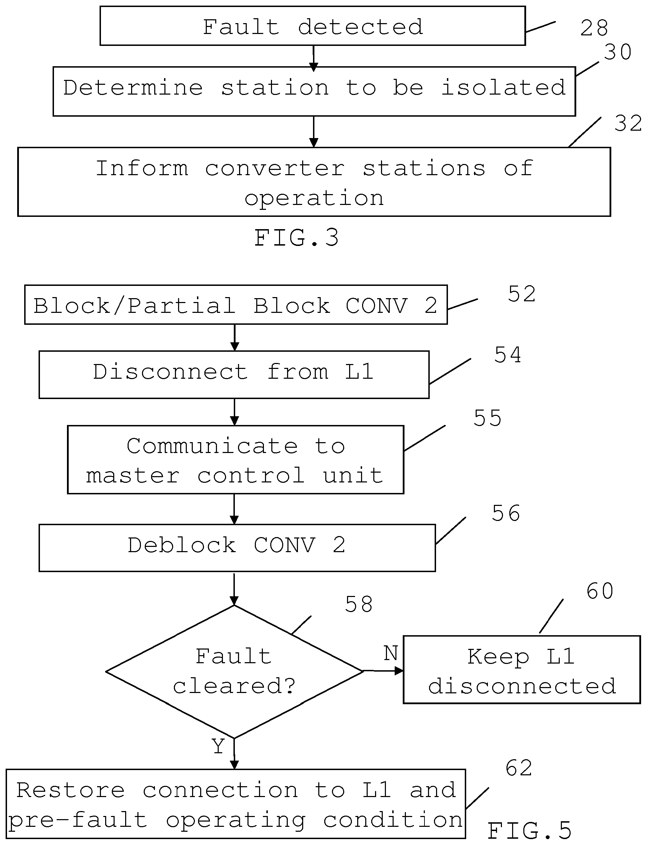

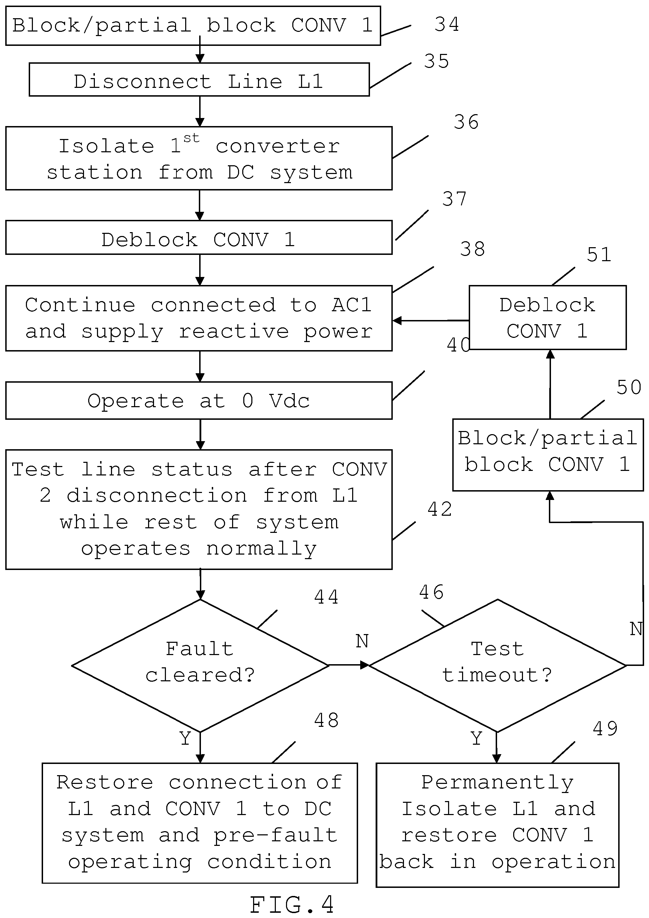

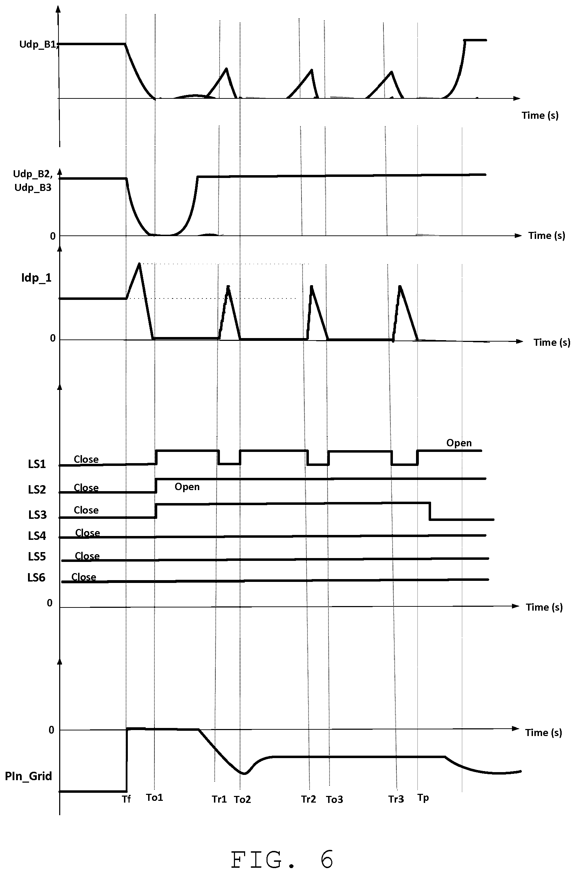

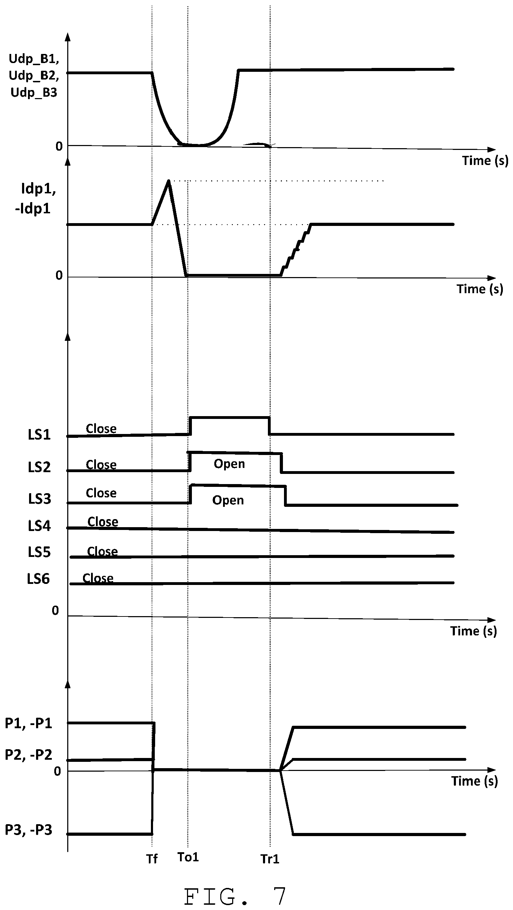

Now the fault handling performed according to embodiments will be described with reference also being made to fig. 3, 4, 5, 6 and 7, where fig. 3 shows a flow chart of a number of method steps being performed in the master control unit 24, fig. 4 shows a flow chart of a number of method steps being performed in the first fault handling unit 18, fig. 5 shows a flow chart of a number of method steps being performed in the second fault handling unit 20, fig. 6 schematically shows a number of current and voltages in the DC power system when a fault occurring in the first power line is being handled and the fault persists and fig. 7 shows a number of current and voltages in the DC power system for the fault occurring in the first power line when the fault is cleared.

The steps being performed are all performed under the assumption that the converters are all DC fault tolerant converters.

Initially the converters output the DC voltages Udp_B1, Udp_B2, Udp_B3 on the DC buses B1, B2 and B3 at certain steady-state levels. A fault F occurring on a power line in the DC power system 10 may then be detected, step 28, for instance on the first power line L1, which detection may be made by the first fault handling unit 18 and/ or by the second fault handling unit 20. The fault may then be detected at a time Tf. One or both of the fault handling units 18 and 20 may then report the fault to the master control unit 24. They may also block or partially block their corresponding converters. The first fault handling unit 18 may thus at least partially block the first converter CONV 1, step 34, and the second fault handling unit 20 may at least partially block the second converter CONV 2, step 52. Also the third converter CONV 3 may be at least partially blocked by the third fault handling unit 22, which may be informed of the fault from the first fault handling unit 18, the second fault handling unit 20 or the master control unit 24. This blocking or partial blocking leads to the DC currents decreasing and eventually going to zero. It can thus be seen that the blocking or partial blocking of the first converter CONV 1 may be made in a blocking operation performed for all converters of the DC power system 10.

After the current through the faulted first power line L1 becomes zero, the first fault handling unit 18 and second fault handling unit 20 operate the first line separating device LS1 and second line separating device LS2 to isolate the faulted first power line L1 from the DC system 10. Upon doing so, successful isolation is communicated to the master control unit 24.

In the given example, it may also happen the first fault handling unit 18 is informed that it is to isolate the first converter station 12, while the second fault handling unit 20 is informed that the second converter station 14 is only to be disconnected from the faulty line L1.

The master control unit 24 thus receives information about the detected fault and the faulty line L1 and then determines a converter station that is to be isolated, step 30.

The determination of which converter station is to be isolated may be made such that a converter station that best matches an isolation criterion is chosen. A determination that a converter station at one end of a power line is to be isolated may thus be based on it better fulfilling an isolating criterion than the converter station at the other end of the power line. In this regard the master control unit 24 may have knowledge about the number of connections that exist between each converter station and the DC system 10. It is also possible that the converter station to be isolated is made based on a contingency analysis of the power system 10. It is also possible to consider the amount of power being transferred by each of the converter stations, where the one transferring the lowest amount maybe selected. It is additionally possible that a weighting or prioritization of the different conditions is being made, where the number of connections may have a higher weight than the amount of power or vice versa. Another possibility is that the converter station the fault handling unit of which first reports the fault is selected. It is finally possible with a random selection.

In the given example the first converter station 12 is selected for being isolated. The master control unit 24 therefore informs the first and second fault handling units 18 and 20 about the decision, step 32. It may also inform the third fault handling unit 22. The master control unit 24 may also send out new power orders to all the converter stations connected in the HVDC Grid reflecting this selection.

As an alternative, there may be a master control unit associated with each of the first, second and third fault handling units 18, 20, 22. Each of the first, second and third fault handling units 18, 20, 22 may thus be equipped with a dedicated master control unit which determines whether the own converter station at one end of the power line with the fault is to be isolated or not.

As mentioned earlier, after the blocking of the converters CONV 1, CONV 2 and CONV 3 and the bringing down of the DC currents through the DC lines L1, L2 , L3 and also of the individual converter stations 12, 14, 16 DC currents to zero, the first fault handling unit 18 operates the first line separating device LS1 in cooperation with operation of the second line separating device LS2 in the second converter station CONV 2 to disconnect the first power line L1 from the power system, step 35, which is typically done through the first fault handling unit 18 opening the first line separating device LS1 and the second fault handling unit 20 opening the second line separating device LS2 for isolating the faulty power line L1 from the DC system 10.

Thereafter, the first fault handling unit 18 isolates the first converter station 12 from the DC system 10, step 36. This is done through operating at least one further line separating device of the first converter station 12. This means that apart from the previously operated first line separating device LS1 the first fault handling unit 18 operates at least one other line separating device of the first converter station 12 in order to perform the isolation. One way in which this may be done, and which is exemplified in fig. 6 and 7 is through opening all of the line separating devices connected between the internal bus B1 and the individual power lines of the DC system 10. In the present example this involves opening the third line separating device LS3 in addition to the previously opened first line separating device LS1. Another and in some instances preferred way is to instead open the seventh line separating device LS7. The isolation is in the case of a FB MMC done when the DC current Idp_1 through the power line L1 has been brought down to zero by the blocking of the converter CONV 1, CONV 2 and CONV 3 and thereby the line separating device LS3 or LS7 in the form of the HSSs may be opened. The opening is carried out at the time To1. In the case of a HB MMC with HHB, then the fault current may not be reduced to zero by the converter, in which case the line separating device in the form of a HHB may still be operated to be opened and interrupt currents running through it.

After the isolating of the first converter station 10 has been carried out, the master control unit 24 may be informed and the master control unit 24 may in turn inform the second and third fault handling units 20 and 22. Alternatively the first fault handling unit 18 may itself inform the second and third fault handling units 20 and 22. It may also coordinate the isolating with the disconnection of the first power line from the DC system 10. The first, second and third line separating devices LS1, LS2 and LS3 may thus all be opened at time t01, which is also a first opening time.

However, the other line separating devices in the system 10 remain closed. At least the fourth, fifth and sixth line separating devices LS4, LS5 and LS6 thus remain closed. This means that if the seventh line separating device LS7 is used for isolating the first converter station also the third line separating device LS3 may or may not remain closed.

The second and third converter stations 14 and 16 may at this time be deblocked and resume operation and start to exchange power P in Grid in the DC grid 10. Also the first converter CONV 1 may be deblocked by the first fault handling unit 18, step 37. The deblocking of the first converter station CONV 1 may thus be made in a deblocking of all the converters stations of the DC power system 10. However the first converter CONV 1 may also be continued to be connected to the AC system AC1 and if needed supply reactive power to it, step 38, for instance through being operated as a reactive power compensation device, like a STATCOM. It may also be operated or controlled to output a zero DC voltage, step 40.

After the first power line L1 has been disconnected or separated from the second converter station 14 and after the above-mentioned isolation has been made while the rest of the DC system 10 is being operated normally, i.e. the power lines L3 between the second converter station 14 and any other converter station 16 are operational, the line status is then tested by the first fault handling unit, step 42, in order to investigate if the fault F has been cleared.

The testing may be done through closing the first line separating device LS1 at a first reclosing time Tr1, where Tr1 - To1 is the deionization time. This closing may be combined and sometimes preceded by a ramping up of the DC voltage Udp_B1 from zero.

If the fault persists, this will lead to the fault current Idp_1 increasing in the faulty power line L1. However, if the fault has been cleared no such current will run.

The first fault handling unit 18 thus investigates if the fault has been cleared by ramping the DC voltage, step 42, which may the ramping to a pre-fault DC voltage value, and if the fault has been cleared, step 44, then the second fault handling unit 20 may be informed, which is followed by restoring of the connection or reconnecting of the faulted DC line L1 and reconnecting the first converter CONV 1 to the DC system 10 , step 48, as well as restoring of the pre-fault operating conditions. This may involve the first fault handling unit 18 operating the first line separating device LS1 in cooperation with the second fault handling unit 20 operating the second line separating device LS2 to reconnect the first power line L1 and the further line separating device(s) used in the isolating to reconnect the first converter station 12 to the DC power system 10. This means that in the example of fig. 7 the connection to the third converter station CONV 3 may be restored through closing of the third line separating device LS3 and the third fault handling unit 22 informed. Thereafter pre-fault operating condition of the DC system 10 may be restored by all the converters, see fig. 7 which involves them using the pre-fault voltages Udp1, Udp2, Udp3.

However in case the fault is not cleared, step 44 then continues and investigates if a test time out has been reached.

Typically only a limited number of line status tests may be performed, such as three, and a test time out is reached if the maximum allowed number of tests has been reached.

In case no test time out has been reached, step 46, the first fault handling unit 18 blocks or partially blocks the first converter CONV 1 in order to reduce the current used for testing to zero, step 50, opens the first line separating device LS1 at a second opening time To2 and deblocks the first converter, step 51.

The first converter CONV 1 then continues and supplies reactive power if needed, step 38, and again lower the DC voltage to zero, step 40.

This is then followed by the first fault handling unit 18 again investigating if the fault has been cleared, step 42, which may be done through closing the first line separating device LS1 at a second reclosing time Tr2, where Tr2 - To2 is a second deionizing time. The closing may also in this case be combined with or preceded by a ramping up of the DC voltage from zero.

In case the fault is cleared, step 44, then the connection of L1 is restored and the first converter reconnected at pre-fault operating conditions, step 48, while if it is not, step 44, the test timeout is investigated, where if the test time out has not been reached, step 46, blocking, opening of the first line separating device LS1 and deblocking are made, steps 50 and 51, and another test is made in a third deionizing time To3 - Tr3, step 42.

However, in case the test timeout has been reached, step 46, then the first fault handling unit 18 permanently disconnects the first DC line L1 from the DC system 10 and restores the first converter CONV 1 back in operation, step 49. The permanent disconnection is obtained through blocking the first converter CONV 1 and thereafter opening and keeping the first line separating device LS1 permanently open. The restoring of the first converter in operation may in turn involve deblocking the first converter, increasing the DC voltage to the pre-fault DC voltage level and closing the line separating device LS3.

The operation performed by the second fault handling unit 20 is at the same time the following:
In the second converter station 14, after the blocking of the second converter CONV 2, step 52, and the ensuing bringing of the DC current through the first power line L1 down to zero, the second fault handling unit 20 disconnects the first power line L1 from the DC system 10 in cooperation with the first fault handling unit 18, step 54. This is done through the second fault handling unit 20 opening the second line separating device LS2 and the first fault handling unit 18 opening the first line separating device LS1. The disconnection thus involves operating the second line separating device LS2 and the first fault handling unit 18 operating the first line separating device LS1 for separating the first power line L1 from the DC system and as can be seen above this is done before the investigation of if the fault F has been cleared.

After this has been done and after the first converter station 12 has been isolated from the DC system 10, the second fault handling unit 20 deblocks the second converter, step 56, in order to allow the second converter station 14 to resume operation with the other non-isolated converter stations of the DC system. It may thus start to exchange power Pin_grid in the DC grid.

It can thereby be seen that the blocking of the second converter CONV 2 takes place prior to the separation of the second converter station 14 from the first power line L1 and the deblocking takes place after the step of isolating.

The second fault handling unit 20 is then being informed about any successful reclosing attempts or if the test timeout has been reached, which may be done either by the first fault handling unit 18 or the master control unit 24. In case the fault was cleared, step 58, then the second fault handling unit 20 reconnects the line L1, step 62, which is done through closing the second line separating device LS2. However in case the fault was not cleared, i.e. in case the test timeout has been reached, step 58, then the second fault handling unit 20 keeps the second converter station 14 permanently disconnected from the first power line L1, step 60. It thus keeps the second line separating device LS2 permanently open.

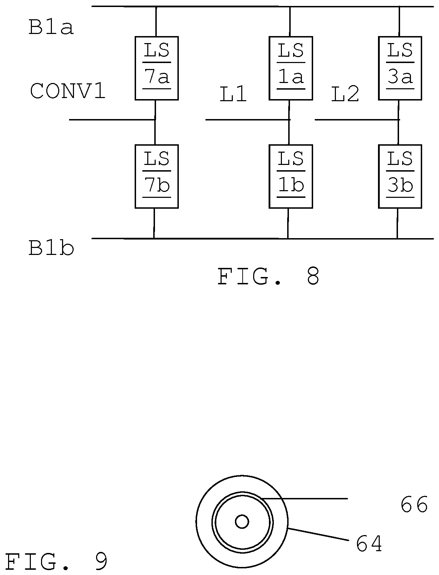

The operation may also be described in the following way for FB MMCs and high-speed switches (HSSs). The restart operation involves the following procedure, for a DC fault in the first power line L1 and when using the seventh line separating device LS7 in the isolating of the first converter station 12:
a) A line protection algorithm at the first and second converter stations 12 and 14 detects the fault F and blocks the converters CONV 1 and CONV 2. The converter CONV 3 is also blocked with the help of either communication or its own protection algorithm.
b) This results in voltage zero in the HVDC grid 10 and the fault current is reduced to zero in the HVDC grid 10.
c) Now in the scheme, all the high speed switches connected to the faulty line L1, LS1 and LS2are opened.
d) Upon the power line L1 disconnection, the master control unit 24 communicates what converter to be isolated, in this example CONV1. If the DC switchyard is equipped with schemes like double busbar scheme or one and half breaker scheme, where it is possible to form 2 separate busbars (B1a and B1b), the corresponding line separating devices along with LS7 are opened. Fig. 8 shows an example of how a double busbar may be realized.
e) Thereafter, the master control unit 24 communicates the new operating condition of the DC grid and the rest of the HVDC grid can ramp up the DC voltage to the new values and continue with the power exchange with any connected AC grid at the second and third converter stations 14 and 16. The first converter station 12 can also continue to support the connected AC system AC1 with reactive power. It is possible to support the AC system by operating as STATCOM either, with zero DC voltage or to ramp up the DC link voltage during the period of deionization.
   I. It may be preferable to operate the first converter CONV 1 at zero DC voltage and support the AC system. At the end of first deionization time Tr1, the faulted line L1 of the disconnected converter station 12 alone attempts restart, by closing LS1 (along with DC PIR to limit the disturbance in the respective AC sides). If the converter was operating at zero DC voltage, the DC voltage shall be ramped up smoothly. During the ramp up of DC voltage from zero, the existence of fault can be easily identified by the rise in current beyond nominal value. If the fault still persists then the first converter CONV 1 voltage Udp_B1 will be reduced to bring the fault current to zero, so that the HSS LS1 can be opened again.
   II. Alternately, the DC voltage Udp_B1 can be ramped up during the deionization period to reduce the time for establishing the power flow in the event of temporary faults. If the fault still persists then the first converter CONV 1 is blocked to reduce the fault current to zero, so that the HSS LS1 can be opened.
e) During this entire process of restart attempt, the first converter CONV 1 can support the AC system without any interruption or with minimal interruption. Also as the HSSs LS2 and LS3 are in open state, the real power flow in the HVDC grid remains unaffected.
f) The above steps from c) is repeated until set number of restart attempts. This is observed with permanent DC fault scenarios which refer to unsuccessful restart attempts. In this case, the faulted line is permanently isolated by opening the HSSs LS1 and LS2. The first converter station is connected back to the DC system and the rest of the system shall continue in normal operation with new power orders.
g) If the fault had disappeared/ cleared, then the voltage reference of the first converter CONV 1 can be set to pre-fault DC voltage and the HSSs, LS2 and LS7 can be closed with pre-insertion resistor followed by pre-insertion resistor bypass. Subsequently, all the converters change their operating mode to pre-fault operating mode. This is observed with temporary DC fault scenarios which refer to successful restart attempts.

It should here be noted that the use of pre-insertion resistors may be avoided if the DC voltage is ramped after closing the line connecting switches.

It is observed in Figure 6 and 7 that in the proposed reclosing scheme power flow in the HVDC grid is established in the shortest possible time, which results in enhanced availability of the system and improved transient stability.

In the above example, if the DC grid has LCC and the CONV1 is LCC. To bring the converter DC current to zero the LCC may be operated in retard operation instead of blocking/partial blocking as with FB MMC. The LCC cannot support the AC grid with reactive power. Also it may not be beneficiary to operate the LCC at zero DC voltage after its isolation from the DC grid during deionization time.

The proposed procedure thus results in improved system availability and power system security, in addition to enhancing the transient stability of the connected AC system. This also reduces the spread of disturbance through the entire HVDC grid during restarts. As the fault disturbance is minimized, the current stress at the valve and other equipment is reduced. The valves and other equipment are thus not subject to current stress at every restart attempt.. The outage in the DC grid is reduced so that the rest of the converters can take up the power flow in the DC grid. As the disturbance in the grid at restart is reduced, the isolated converters in case of VSC can continue to support the connected AC system with reactive power support, during the fault scenario of the entire restart period.

The previously described scheme can thus be performed for a HVDC grid which has one or more DC fault tolerant converters such as Line commutated converter (LCC), FB MMC and hybrid converter. However, it is not limited to these converters. If other types of converters are used it is possible to omit the blocking of the converters and/or the bringing of the DC voltage down to zero. The closing of a circuit breaker during testing may in this case be the gradual closing, where one or a number of sections are being closed. This mode of operation has the advantage of limiting the stress on the switches of the line separating device.

The above describe scheme can also be employed in radial DC grid where two separate grids are formed and the effect of restarts are minimal. Further the scheme can also be employed in a Hybrid DC grid involving a combination of HB MMC + HHB, FB MMC + HSSs/ disconnectors and LCCs.

The fault handling units may as was mentioned above be provided in a fault handling arrangement, where the fault handling arrangement may comprise only the first fault handling unit, the first fault handling unit and the master control unit, the first and second fault handling units together with the master control unit or the first, second and third fault handling unit together with the master control unit. The fault handling arrangement may be provided in the form of a processor with associated program memory comprising computer program code for performing the functions of one or more of the fault handling units. The fault handling arrangement may also be implemented as one or more components, such as one or more field-programmable gate arrays (FPGAs) or Application-Specific Integrated Circuits (ASICs). The above-mentioned computer program code may also be provided as a computer program product comprising a data carrier with computer program code for implementing the functionality of one or more of the fault handling units. Fig. 9 shows one such data carrier 64 in the form of a CD ROM disk with this computer program code 66.

While the invention has been described in connection with what is presently considered to be most practical and preferred embodiments, it is to be understood that the invention is not to be limited to the disclosed embodiments, but on the contrary, is intended to cover various modifications and equivalent devices and arrangements. Therefore the invention is only to be limited by the following claims.

## Claims

1. A method of handling faults (F) on power lines in a DC, direct current, power system (10) comprising at least two converters (CONV 1, CONV 2, CONV 3) in corresponding converter stations (12, 14, 16) connected to different DC power lines, where each converter station is connected to a number of DC power lines (L1, L2, L3) at least one of which is a power line in the DC power system and each connection is made via at least one line separating device (LS1, LS2, LS3, LS4, LS5, LS6, LS7, LS8, LS9), the method being performed in a fault handling arrangement (26) and comprising
upon the detecting of a fault (F) of a first power line (L1) in the DC power system (10) interconnecting a first converter (CONV 1) in a first converter station (12) with a second converter (CONV 2) in a second converter station (14), where the first power line (L1) is connected to the first converter (CONV 1) via a first line separating device (LS1) and to the second converter (CONV 2) via a second line separating device (LS2), operating (35) the first line separating device (LS1) in cooperation with operation of the second line separating device (LS2) to disconnect the first power line (L1) from the DC power system,
operating (36) at least one further line separating device (LS3), of the first converter station (12) for isolating the first converter station (12) from the DC power system (10),
investigating (42) if the fault (F) has been cleared, after the second line separating device (L2) has been operated for separating the first power line (L1) from the second converter station (14) while power lines (L3) between the second converter station (14) and any other converter station (16) are operational, and
operating (48) the first line separating device (LS1) in cooperation with operation of the second line separating device (LS2) to reconnect the first power line (L1) and said at least one further line separating device (LS3) of the first converter station (12) to again connect the first converter station (12) to the DC power system (10) if (58) the fault (F) has been cleared and otherwise permanently disconnecting (49) the first power line and reconnecting the first converter station (12) to the DC power system.

2. The method according to claim 1, wherein the permanent disconnection of the first power line is made after a predetermined number of fault clearance investigations.

3. The method according to claim 1 or 2, further comprising at least partially blocking (34) the first converter (CONV 1) prior to the step of isolating (36) and deblocking (37) the first converter station (12).

4. The method according to claim 3, wherein the at least partially blocking of the first converter (CONV 1) is made in a blocking of all converters of the DC power system (10) and the deblocking of the first converter (CONV 1) is made in a deblocking of all the converters of the DC power system (10).

5. The method according to any previous claim, further comprising supporting (38) an alternating current, AC, system (AC1) connected to the first converter station (12) during the investigating of the fault.

6. The method according to any previous claim further comprising operating (40) the first converter (CONV 1) at zero DC voltage when investigating if the fault (F) has been cleared.

7. The method according to any previous claims, further comprising ramping up the DC voltage output by the first converter (CONV 1) from a zero voltage level when investigating if the fault (F) has been cleared.

8. The method according to any previous claim, further comprising determining (30) that the first converter station is to be isolated based on it better fulfilling an isolating criterion than the second converter station (14).

9. The method according to claim 8, wherein the determining of if the isolating criterion is better fulfilled comprises determining which of the first and second converter station (12, 14) has the lower number of connections to the DC power system (10).

10. The method according to any previous claim further comprising operating the second line separating device (LS2) to disconnect the first power line (L1) from the DC power system.

11. The method according to claim 10, when depending on claim 3 or 4, further comprising at least partially blocking (52) the second converter (CONV 2) prior to the disconnecting of the first power line and deblocking (56) the second converter station after the step of disconnecting.

12. A fault handling arrangement (26) for handling faults on power lines in a direct current, DC, power system (10) comprising at least two converters (CONV 1, CONV 2, CONV 3) in corresponding converter stations (12, 14, 16) connected to different power lines, where each converter station (12, 14, 16) is connected to a number of DC power lines (L1, L2, L3) at least one of which is a power line in the DC power system and a connection is made via at least one line separating device (LS1, LS2, LS3, LS4, LS5, LS6), the fault handling arrangement comprising a first fault handling unit (18) configured to
upon the detecting of a fault (F) of a first power line (L1) interconnecting a first converter (CONV 1) in a first converter station (12) with a second converter (CONV 2) in a second converter stations (14), where the first power line (L1) is connected to the first converter (CONV 1) via a first line separating device (LS1) and to the second converter (CONV 2) via a second line separating device (LS2),
operate the first line separating device (LS1) in cooperation with operation of the second line separating device (LS2) to disconnect the first power line (L1) from the DC power system,
operate at least one further line separating device (LS3) of the first converter station (12) for isolating the first converter station (12) from all the connected DC power system (10),
investigate if the fault (F) has been cleared, after the second line separating device (LS2) has been operated for separating the first power line from the second converter station (14) while power lines (L3) between the second converter station (14) and any other converter station (16) are operational, and
operate the first line separating device (LS1) in cooperation with operation of the second line separating device (LS2) to reconnect the first power line (L1) and the at least one further line separating device (LS3) of the first converter station (12) to again connect the first converter station to the DC power system (10) if the fault (F) has been cleared and otherwise permanently disconnect the first power line and reconnect the first converter station (12) to the DC power system.

13. The fault handling arrangement (26) according to claim 12, further comprising a master control unit (24) configured to determine that the first converter station (12) is to be isolated based on it better fulfilling an isolating criterion than the second converter station (14).

14. The fault handling arrangement (26) according to claim 12 or 13, further comprising a second fault handling unit (20) configured to operate the second line separating device (LS2) for separating the first power line (L1) from the second converter station (14) before investigating if the fault (F) has been cleared.

15. The fault handling arrangement (26) according to any of claims 12 - 14, wherein at least the first converter is a DC fault tolerant converter and the line separating device is a high-speed switch or ultrafast disconnector.

16. A direct current, DC, power system (10) comprising a number of power lines (L1, L2, L3), a number of line separating devices (LS1, LS2, LS3, LS4, LS5, LS6) and at least two converters (CONV 1, CONV 2, CONV 3) in corresponding converter stations (12, 14, 16) connected to different power lines, and a fault handling arrangement according to any of claims 12 - 15, where each converter station (12, 14, 16) is connected to a number of DC power lines (L1, L2, L3) at least one of which is a power line in the DC power system and each connection is made via at least one line separating device (LS1, LS2, LS3, LS4, LS5, LS6).

17. A computer program product for handling faults on power lines in a DC, direct current, power system (10) comprising a number of power lines (L1, L2, L3), a number of line separating devices (LS1, LS2, LS3, LS4, LS5, LS6) and at least two converters (CONV 1, CONV 2, CONV 3) in corresponding converter stations (12, 14, 16) connected to different power lines, where each converter station (12, 14, 16) is connected to a number of DC power lines (L1, L2, L3) at least one of which is a power line in the DC power system and each connection is made via at least one line separating device (LS1, LS2, LS3, LS4, LS5, LS6), the computer program product comprising a data carrier (64) having computer program code (66) configured to cause a fault handling arrangement (26) to:
upon the detecting of a fault (F) of a first power line (L1) interconnecting a first converter (CONV 1) in a first converter station (12) with a second converter (CONV 2) in a second converter stations (14), where the first power line (L1) is connected to the first converter (CONV 1) via a first line separating device (LS1) and to the second converter (CONV 2) via a second line separating device (LS2),
operate (35) the first line separating device (LS1) in cooperation with operation of the second line separating device (LS2) to disconnect the first power line (L1) from the DC power system,
operate at least one further line separating device (LS3) of the first converter station (12) for isolating the first converter station (12) from the DC power system (10),
investigate if the fault (F) has been cleared, after the second line separating device (LS2) has been operated for separating the first power line (L1) from the second converter station (14) while power lines (L3) between the second converter station (14) and any other converter station (16) are operational, and
operate the first line separating device (LS1) in cooperation with operation of the second line separating device (LS2) to reconnect the first power line (L1) and the at least one further line separating device (LS3) of the first converter station (12) to again connect the first converter station to the DC power system (10) if the fault (F) has been cleared and otherwise permanently disconnect the first power line and reconnect the first converter station (12) to the DC power system.

## Patentansprüche

1. Verfahren zum Behandeln von Fehlern (F) an Netzleitungen in einem DC-, Gleichstrom-, Netzsystem (10) umfassend mindestens zwei Umrichter (CONV 1, CONV 2, CONV 3) in entsprechenden Umrichterstationen (12, 14, 16) mit verschiedenen DC-Netzleitungen verbunden, wobei jede Umrichterstation mit einer Anzahl von DC-Netzleitungen (L1, L2, L3) verbunden ist, von denen mindestens eine eine Netzleitung in dem DC-Netzsystem ist und jede Verbindung über mindestens eine Leitungstrenneinrichtung (LS1, LS2, LS3, LS4, LS5, LS6, LS7, LS8, LS9) erfolgt, wobei das Verfahren in einer Fehlerbehandlungsanordnung (26) durchgeführt wird und umfasst
beim Detektieren eines Fehlers (F) einer ersten Netzleitung (L1) in dem DC-Netzsystem (10) zusammenschaltend einen ersten Umrichter (CONV 1) in einer ersten Umrichterstation (12) mit einem zweiten Umrichter (CONV 2) in einer zweiten Umrichterstation (14), wobei die erste Netzleitung (L1) mit dem ersten Umrichter (CONV 1) über eine erste Leitungstrenneinrichtung (LS1) und mit dem zweiten Umrichter (CONV 2) über eine zweite Leitungstrenneinrichtung (LS2) verbunden ist,
Betreiben (35) der ersten Leitungstrenneinrichtung (LS1) in Kooperation mit einem Betrieb der zweiten Leitungstrenneinrichtung (LS2) zum Trennen der ersten Netzleitung (L1) von dem DC-Netzsystem,
Betreiben (36) mindestens einer weiteren Leitungstrenneinrichtung (LS3) der ersten Umrichterstation (12) zum Isolieren der ersten Umrichterstation (12) von dem DC-Netzsystem (10),
Untersuchen (42), ob der Fehler (F) beseitigt worden ist, nachdem die zweite Leitungstrenneinrichtung (LS2) betrieben worden ist zum Trennen der ersten Netzleitung (L1) von der zweiten Umrichterstation (14), während Netzleitungen (L3) zwischen der zweiten Umrichterstation (14) und irgendeiner anderen Umrichterstation (16) betriebsbereit sind, und
Betreiben (48) der ersten Leitungstrenneinrichtung (LS1) in Kooperation mit dem Betrieb der zweiten Leitungstrenneinrichtung (LS2) zum Wiederanschließen der ersten Netzleitung (L1) und der mindestens einen weiteren Leitungstrenneinrichtung (LS3) der ersten Umrichterstation (12) zum Wiederverbinden der ersten Umrichterstation (12) mit dem DC-Netzsystem (10), falls (58) der Fehler (F) beseitigt worden ist, und ansonsten permanentes Trennen (49) der ersten Netzleitung und Wiederanschließen der ersten Umrichterstation (12) an das DC-Netzsystem.

2. Verfahren nach Anspruch 1, wobei die permanente Trennung der ersten Netzleitung nach einer vorbestimmten Anzahl von Fehlerbeseitigungsuntersuchungen vorgenommen wird.

3. Verfahren nach Anspruch 1 oder 2, weiter umfassend mindestens das teilweise Blockieren (34) des ersten Umrichters (CONV 1) vor dem Schritt des Isolierens (36) und Entblockierens (37) der ersten Umrichterstation (12).

4. Verfahren nach Anspruch 3, wobei das mindestens teilweise Blockieren des ersten Umrichters (CONV 1) in einem Blockieren aller Umrichter des DC-Netzsystems (10) vorgenommen wird und das Entblockieren des ersten Umrichters (CONV 1) in einem Entblockieren aller der Umrichter des DC-Netzsystems (10) vorgenommen wird.

5. Verfahren nach einem vorhergehenden Anspruch, weiter umfassend das Unterstützen (38) eines mit der ersten Umrichterstation (12) verbundenen Wechselstrom-, AC-, Systems (AC1) während der Untersuchung des Fehlers.

6. Verfahren nach einem vorhergehenden Anspruch, weiter umfassend das Betreiben (40) des ersten Umrichters (CONV 1) bei einer Null-DC-Spannung beim Untersuchen, ob der Fehler (F) beseitigt worden ist.

7. Verfahren nach beliebigen vorhergehenden Ansprüchen, weiter umfassend das Hochfahren der durch den ersten Umrichter (CONV 1) ausgegebenen DC-Spannung von einem Nullspannungspegel beim Untersuchen, ob der Fehler (F) beseitigt worden ist.

8. Verfahren nach einem vorhergehenden Anspruch, weiter umfassend das Bestimmen (30), dass die erste Umrichterstation isoliert werden soll, auf Basis dessen, dass sie ein Isolierkriterium besser erfüllt als die zweite Umrichterstation (14).

9. Verfahren nach Anspruch 8, wobei das Bestimmen dessen, ob das Isolierkriterium besser erfüllt ist, das Bestimmen umfasst, welche der ersten und zweiten Umrichterstation (12, 14) die kleinere Anzahl von Verbindungen mit dem DC-Netzsystem (10) aufweist.

10. Verfahren nach einem vorhergehenden Anspruch, weiter umfassend das Betreiben der zweiten Leitungstrenneinrichtung (LS2) zum Trennen der ersten Netzleitung (L1) von dem DC-Netzsystem.

11. Verfahren nach Anspruch 10, wenn abhängig von Anspruch 3 oder 4, weiter umfassend das mindestens teilweise Blockieren (52) des zweiten Umrichters (CONV 2) vor dem Trennen der ersten Netzleitung und Entblockieren (56) der zweiten Umrichterstation nach dem Schritt des Trennens.

12. Fehlerbehandlungsanordnung (26) zum Behandeln von Fehlern an Netzleitungen in einem DC-, Gleichstrom-, Netzsystem (10) umfassend mindestens zwei Umrichter (CONV 1, CONV 2, CONV 3) in entsprechenden Umrichterstationen (12, 14, 16) mit verschiedenen Netzleitungen verbunden, wobei jede Umrichterstation (12, 14, 16) mit einer Anzahl von DC-Netzleitungen (L1, L2, L3) verbunden ist, von denen mindestens eine eine Netzleitung in dem DC-Netzsystem ist und eine Verbindung über mindestens eine Leitungstrenneinrichtung (LS1, LS2, LS3, LS4, LS5, LS6) erfolgt, wobei die Fehlerbehandlungsanordnung eine erste Fehlerbehandlungseinheit (18) umfasst, die ausgelegt ist zum
beim Detektieren eines Fehlers (F) einer ersten Netzleitung (L1) zusammenschaltend einen ersten Umrichter (CONV 1) in einer ersten Umrichterstation (12) mit einem zweiten Umrichter (CONV 2) in einer zweiten Umrichterstation (14), wobei die erste Netzleitung (L1) mit dem ersten Umrichter (CONV 1) über eine erste Leitungstrenneinrichtung (LS1) und mit dem zweiten Umrichter (CONV 2) über eine zweite Leitungstrenneinrichtung (LS2) verbunden ist,
Betreiben der ersten Leitungstrenneinrichtung (LS1) in Kooperation mit einem Betrieb der zweiten Leitungstrenneinrichtung (LS2) zum Trennen der ersten Netzleitung (L1) von dem DC-Netzsystem,
Betreiben mindestens einer weiteren Leitungstrenneinrichtung (LS3) der ersten Umrichterstation (12) zum Isolieren der ersten Umrichterstation (12) von dem ganzen angeschlossenen DC-Netzsystem (10),
Untersuchen, ob der Fehler (F) beseitigt worden ist, nachdem die zweite Leitungstrenneinrichtung (LS2) betrieben worden ist zum Trennen der ersten Netzleitung von der zweiten Umrichterstation (14), während Netzleitungen (L3) zwischen der zweiten Umrichterstation (14) und irgendeiner anderen Umrichterstation (16) betriebsbereit sind, und
Betreiben der ersten Leitungstrenneinrichtung (LS1) in Kooperation mit dem Betrieb der zweiten Leitungstrenneinrichtung (LS2) zum Wiederanschließen der ersten Netzleitung (L1) und der mindestens einen weiteren Leitungstrenneinrichtung (LS3) der ersten Umrichterstation (12) zum Wiederverbinden der ersten Umrichterstation mit dem DC-Netzsystem (10), falls der Fehler (F) beseitigt worden ist, und ansonsten permanentes Trennen der ersten Netzleitung und Wiederanschließen der ersten Umrichterstation (12) an das DC-Netzsystem.

13. Fehlerbehandlungsanordnung (26) nach Anspruch 12, weiter umfassend eine Master-Steuereinheit (24), ausgelegt zum Bestimmen, dass die erste Umrichterstation (12) isoliert werden soll, auf Basis dessen, dass sie ein Isolierkriterium besser erfüllt als die zweite Umrichterstation (14).

14. Fehlerbehandlungsanordnung (26) nach Anspruch 12 oder 13, weiter umfassend eine zweite Fehlerbehandlungseinheit (20), ausgelegt zum Betreiben der zweiten Leitungstrenneinrichtung (LS2) zum Trennen der ersten Netzleitung (L1) von der zweiten Umrichterstation (14) vor dem Untersuchen, ob der Fehler (F) beseitigt worden ist.

15. Fehlerbehandlungsanordnung (26) nach einem der Ansprüche 12-14, wobei mindestens der erste Umrichter ein DC-Fehler-toleranter Umrichter ist und die Leitungstrenneinrichtung ein Hochgeschwindigkeitsschalter oder ein ultraschneller Trenner ist.

16. Gleichstrom-, DC-, Netzsystem (10) umfassend eine Anzahl von Netzleitungen (L1, L2, L3), eine Anzahl von Leitungstrenneinrichtungen (LS1, LS2, LS3, LS4, LS5, LS6) und mindestens zwei Umrichter (CONV 1, CONV 2, CONV 3) in entsprechenden Umrichterstationen (12, 14, 16), die mit verschiedenen Netzleitungen verbunden sind, und eine Fehlerbehandlungsanordnung nach einem der Ansprüche 12-15, wobei jede Umrichterstation (12, 14, 16) mit einer Anzahl von DC-Netzleitungen (L1, L2, L3) verbunden ist, von denen mindestens eine eine Netzleitung in dem DC-Netzsystem ist und jede Verbindung über mindestens eine Leitungstrenneinrichtung (LS1, LS2, LS3, LS4, LS5, LS6) vorgenommen wird.

17. Computerprogrammprodukt zum Behandeln von Fehlern auf Netzleitungen in einem DC-, Gleichstrom-, Netzsystem (10) umfassend eine Anzahl von Netzleitungen (L1, L2, L3), eine Anzahl von Leitungstrenneinrichtungen (LS1, LS2, LS3, LS4, LS5, LS6) und mindestens zwei Umrichter (CONV 1, CONV 2, CONV 3) in entsprechenden Umrichterstationen (12, 14, 16), die mit verschiedenen Netzleitungen verbunden sind, wobei jede Umrichterstation (12, 14, 16) mit einer Anzahl von DC-Netzleitungen (L1, L2, L3) verbunden ist, von denen mindestens eine eine Netzleitung in dem DC-Netzsystem ist und jede Verbindung über mindestens eine Leitungstrenneinrichtung (LS1, LS2, LS3, LS4, LS5, LS6) erfolgt, wobei das Computerprogrammprodukt einen Datenträger (64) mit einem Computerprogrammcode (66) aufweist, ausgelegt zum Bewirken einer Fehlerbehandlungsanordnung (26) zum:
beim Detektieren eines Fehlers (F) einer ersten Netzleitung (L1) zusammenschaltend einen ersten Umrichter (CONV 1) in einer ersten Umrichterstation (12) mit einem zweiten Umrichter (CONV 2) in einer zweiten Umrichterstation (14), wobei die erste Netzleitung (L1) mit dem ersten Umrichter (CONV 1) über eine erste Leitungstrenneinrichtung (LS1) und mit dem zweiten Umrichter (CONV 2) über eine zweite Leitungstrenneinrichtung (LS2) verbunden ist,
Betreiben (35) der ersten Leitungstrenneinrichtung (LS1) in Kooperation mit einem Betrieb der zweiten Leitungstrenneinrichtung (LS2) zum Trennen der ersten Netzleitung (L1) von dem DC-Netzsystem,
Betreiben mindestens einer weiteren Leitungstrenneinrichtung (LS3) der ersten Umrichterstation (12) zum Isolieren der ersten Umrichterstation (12) von dem DC-Netzsystem (10),
Untersuchen, ob der Fehler (F) beseitigt worden ist, nachdem die zweite Leitungstrenneinrichtung (LS2) betrieben worden ist zum Trennen der ersten Netzleitung (L1) von der zweiten Umrichterstation (14), während Netzleitungen (L3) zwischen der zweiten Umrichterstation (14) und irgendeiner anderen Umrichterstation (16) betriebsbereit sind, und
Betreiben der ersten Leitungstrenneinrichtung (LS1) in Kooperation mit dem Betrieb der zweiten Leitungstrenneinrichtung (LS2) zum Wiederanschließen der ersten Netzleitung (L1) und der mindestens einen weiteren Leitungstrenneinrichtung (LS3) der ersten Umrichterstation (12) zum Wiederverbinden der ersten Umrichterstation mit dem DC-Netzsystem (10), falls der Fehler (F) beseitigt worden ist, und ansonsten permanentes Trennen der ersten Netzleitung und Wiederanschließen der ersten Umrichterstation (12) an das DC-Netzsystem.

## Revendications

1. Procédé de gestion de défauts (F) sur des lignes électriques dans un système d'alimentation en courant continu, DC, (10) comprenant au moins deux convertisseurs (CONV 1, CONV 2, CONV 3) dans des stations de convertisseur correspondantes (12, 14, 16) connectées à différentes lignes électriques DC, chaque station de convertisseur étant connectée à un certain nombre de lignes électriques DC (L1, L2, L3) dont au moins une est une ligne électrique dans le système d'alimentation DC et chaque connexion étant réalisée par l'intermédiaire d'au moins un dispositif de séparation de ligne (LS1, LS2, LS3, LS4, LS5, LS6, LS7, LS8, LS9), le procédé étant mis en œuvre dans un dispositif de gestion de défauts (26) et comprenant,
lors de la détection d'un défaut (F) d'une première ligne électrique (L1) dans le système d'alimentation DC (10) interconnectant un premier convertisseur (CONV 1) dans une première station de convertisseur (12) avec un second convertisseur (CONV 2) dans une seconde station de convertisseur (14), la première ligne électrique (L1) étant connectée au premier convertisseur (CONV 1) par l'intermédiaire d'un premier dispositif de séparation de ligne (LS1) et au second convertisseur (CONV 2) par l'intermédiaire d'un second dispositif de séparation de ligne (LS2),
la mise en fonctionnement (35) du premier dispositif de séparation de ligne (LS1) en coopération avec le fonctionnement du second dispositif de séparation de ligne (LS2) pour déconnecter la première ligne électrique (L1) du système d'alimentation DC,
la mise en fonctionnement (36) d'au moins un autre dispositif de séparation de ligne (LS3) de la première station de convertisseur (12) pour isoler la première station de convertisseur (12) du système d'alimentation DC (10),
l'examen (42) du fait de savoir si le défaut (F) a été supprimé, après que le second dispositif de séparation de ligne (L2) a été mis en fonctionnement pour séparer la première ligne électrique (L1) de la seconde station de convertisseur (14) tandis que des lignes électriques (L3) entre la seconde station de convertisseur (14) et toute autre station de convertisseur (16) sont opérationnelles, et
la mise en fonctionnement (48) du premier dispositif de séparation de ligne (LS1) en coopération avec le fonctionnement du second dispositif de séparation de ligne (LS2) pour reconnecter la première ligne électrique (L1) et ledit au moins un autre dispositif de séparation de ligne (LS3) de la première station de convertisseur (12) afin de connecter à nouveau la première station de convertisseur (12) au système d'alimentation DC (10) si (58) le défaut (F) a été supprimé et sinon, déconnecter de façon permanente (49) la première ligne électrique et reconnecter la première station de convertisseur (12) au système d'alimentation DC.

2. Procédé selon la revendication 1, dans lequel la déconnexion permanente de la première ligne électrique est réalisée après un nombre prédéterminé d'examens de suppression de défauts.

3. Procédé selon la revendication 1 ou 2, comprenant en outre le blocage au moins partiel (34) du premier convertisseur (CONV 1) avant l'étape d'isolation (36) et de déblocage (37) de la première station de convertisseur (12) .

4. Procédé selon la revendication 3, dans lequel le blocage au moins partiel du premier convertisseur (CONV 1) est réalisé lors d'un blocage de tous les convertisseurs du système d'alimentation DC (10) et le déblocage du premier convertisseur (CONV 1) est réalisé lors d'un déblocage de tous les convertisseurs du système d'alimentation DC (10).

5. Procédé selon l'une quelconque des revendications précédentes, comprenant en outre la prise en charge (38) d'un système à courant alternatif, AC, (AC1) connecté à la première station de convertisseur (12) pendant l'examen du défaut.

6. Procédé selon l'une quelconque des revendications précédentes, comprenant en outre la mise en fonctionnement (40) du premier convertisseur (CONV 1) à une tension DC nulle lorsqu'il est examiné si le défaut (F) a été supprimé.

7. Procédé selon l'une quelconque des revendications précédentes, comprenant en outre la montée en puissance de la tension DC délivrée par le premier convertisseur (CONV 1) à partir d'un niveau de tension nulle lorsqu'il est examiné si le défaut (F) a été supprimé.

8. Procédé selon l'une quelconque des revendications précédentes, comprenant en outre la détermination (30) du fait que la première station de convertisseur doit être isolée sur la base du fait qu'elle satisfait mieux à un critère d'isolation que la seconde station de convertisseur (14).

9. Procédé selon la revendication 8, dans lequel la détermination du fait que le critère d'isolation est mieux satisfait comprend la détermination de celle des première et seconde stations de convertisseur (12, 14) qui a le plus petit nombre de connexions au système d'alimentation DC (10).

10. Procédé selon l'une quelconque des revendications précédentes comprenant en outre la mise en fonctionnement du second dispositif de séparation de ligne (LS2) pour déconnecter la première ligne électrique (L1) du système d'alimentation DC.

11. Procédé selon la revendication 10, lorsqu'elle dépend de la revendication 3 ou 4, comprenant en outre le blocage au moins partiel (52) du second convertisseur (CONV 2) avant la déconnexion de la première ligne électrique et le déblocage (56) de la seconde station de convertisseur après l'étape de déconnexion.

12. Agencement de gestion de défauts (26) destiné à gérer des défauts sur des lignes électriques dans un système d'alimentation en courant continu, DC, (10) comprenant au moins deux convertisseurs (CONV 1, CONV 2, CONV 3) dans des stations de convertisseur correspondantes (12, 14, 16) connectées à différentes lignes électriques, chaque station de convertisseur (12, 14, 16) étant connectée à un certain nombre de lignes électriques DC (L1, L2, L3) dont au moins une est une ligne électrique dans le système d'alimentation DC et une connexion étant réalisée par l'intermédiaire d'au moins un dispositif de séparation de ligne (LS1, LS2, LS3, LS4, LS5, LS6), l'agencement de gestion de défauts comprenant une première unité de gestion de défauts (18) configurée pour,
lors de la détection d'un défaut (F) d'une première ligne électrique (L1) interconnectant un premier convertisseur (CONV1) dans une première station de convertisseur (12) avec un second convertisseur (CONV2) dans une seconde station de convertisseur (14), la première ligne électrique (L1) étant connectée au premier convertisseur (CONV 1) par l'intermédiaire d'un premier dispositif de séparation de ligne (LS1) et au second convertisseur (CONV 2) par l'intermédiaire d'un second dispositif de séparation de ligne (LS2),
faire fonctionner le premier dispositif de séparation de ligne (LS1) en coopération avec le fonctionnement du second dispositif de séparation de ligne (LS2) pour déconnecter la première ligne électrique (L1) du système d'alimentation DC,
faire fonctionner au moins un autre dispositif de séparation de ligne (LS3) de la première station de convertisseur (12) pour isoler la première station de convertisseur (12) de tout le système d'alimentation DC (10) connecté,
examiner si le défaut (F) a été supprimé, après que le second dispositif de séparation de ligne (LS2) a été mis en fonctionnement pour séparer la première ligne électrique de la seconde station de convertisseur (14) tandis que des lignes électriques (L3) entre la seconde station de convertisseur (14) et toute autre station de convertisseur (16) sont opérationnelles, et
faire fonctionner le premier dispositif de séparation de ligne (LS1) en coopération avec le fonctionnement du second dispositif de séparation de ligne (LS2) pour reconnecter la première ligne électrique (L1) et ledit au moins un autre dispositif de séparation de ligne (LS3) de la première station de convertisseur (12) afin de connecter à nouveau la première station de convertisseur au système d'alimentation DC (10) si le défaut (F) a été supprimé et sinon, déconnecter de façon permanente la première ligne électrique et reconnecter la première station de convertisseur (12) au système d'alimentation DC.

13. Agencement de gestion de défauts (26) selon la revendication 12, comprenant en outre une unité de commande principale (24) configurée pour déterminer que la première station de convertisseur (12) doit être isolée sur la base du fait qu'elle satisfait mieux à un critère d'isolation que la seconde station de convertisseur (14).

14. Agencement de gestion de défauts (26) selon la revendication 12 ou 13, comprenant en outre une seconde unité de gestion de défauts (20) configurée pour faire fonctionner le second dispositif de séparation de ligne (LS2) pour séparer la première ligne électrique (L1) de la seconde station de convertisseur (14) avant d'examiner si le défaut (F) a été supprimé.

15. Agencement de gestion de défauts (26) selon l'une quelconque des revendications 12 - 14, dans lequel au moins le premier convertisseur est un convertisseur tolérant aux défauts DC et le dispositif de séparation de ligne est un commutateur à grande vitesse ou un disjoncteur ultrarapide.

16. Système d'alimentation en courant continu, DC, (10) comprenant un certain nombre de lignes électriques (L1, L2, L3), un certain nombre de dispositifs de séparation de ligne (LS1, LS2, LS3, LS4, LS5, LS6) et au moins deux convertisseurs (CONV 1, CONV 2, CONV 3) dans des stations de convertisseur correspondantes (12, 14, 16) connectées à différentes lignes électriques, et un dispositif de gestion de défauts selon l'une quelconque des revendications 12 à 15, chaque station de convertisseur (12, 14, 16) étant connectée à un certain nombre de lignes électriques DC (L1, L2, L3) dont au moins une est une ligne électrique dans le système d'alimentation DC et chaque connexion étant réalisée par l'intermédiaire d'au moins un dispositif de séparation de ligne (LS1, LS2, LS3, LS4, LS5, LS6) .

17. Produit de programme informatique destiné à gérer des défauts sur des lignes électriques dans un système d'alimentation en courant continu, DC, (10) comprenant un certain nombre de lignes électriques (L1, L2, L3), un certain nombre de dispositifs de séparation de ligne (LS1, LS2, LS3, LS4, LS5, LS6) et au moins deux convertisseurs (CONV 1, CONV 2, CONV 3) dans des stations de convertisseur correspondantes (12, 14, 16) connectées à différentes lignes électriques, chaque station de convertisseur (12, 14, 16) étant connectée à un certain nombre de lignes électriques DC (L1, L2, L3) dont au moins une est une ligne électrique dans le système d'alimentation DC et chaque connexion étant réalisée par l'intermédiaire d'au moins un dispositif de séparation de ligne (LS1, LS2, LS3, LS4, LS5, LS6), le produit de programme informatique comprenant un support de données (64) ayant un code de programme informatique (66) configuré pour amener un dispositif de gestion de défauts (26) à :
lors de la détection d'un défaut (F) d'une première ligne électrique (L1) interconnectant un premier convertisseur (CONV 1) dans une première station de convertisseur (12) avec un second convertisseur (CONV2) dans une seconde station de convertisseur (14), la première ligne électrique (L1) étant connectée au premier convertisseur (CONV 1) par l'intermédiaire d'un premier dispositif de séparation de ligne (LS1) et au second convertisseur (CONV 2) par l'intermédiaire d'un second dispositif de séparation de ligne (LS2),
faire fonctionner (35) le premier dispositif de séparation de ligne (LS1) en coopération avec le fonctionnement du second dispositif de séparation de ligne (LS2) pour déconnecter la première ligne électrique (L1) du système d'alimentation DC,
faire fonctionner au moins un autre dispositif de séparation de ligne (LS3) de la première station de convertisseur (12) pour isoler la première station de convertisseur (12) du système d'alimentation DC (10),
examiner si le défaut (F) a été supprimé, après que le second dispositif de séparation de ligne (LS2) a été mis en fonctionnement pour séparer la première ligne électrique (L1) de la seconde station de convertisseur (14) tandis que des lignes électriques (L3) entre la seconde station de convertisseur (14) et toute autre station de convertisseur (16) sont opérationnelles, et
faire fonctionner le premier dispositif de séparation de ligne (LS1) en coopération avec le fonctionnement du second dispositif de séparation de ligne (LS2) pour reconnecter la première ligne électrique (L1) et ledit au moins un autre dispositif de séparation de ligne (LS3) de la première station de convertisseur (12) afin de connecter à nouveau la première station de convertisseur au système d'alimentation DC (10) si le défaut (F) a été supprimé et sinon, déconnecter de façon permanente la première ligne électrique et reconnecter la première station de convertisseur (12) au système d'alimentation DC.
